# EUROPEAN PATENT APPLICATION

(11) **EP 0 750 406 A2**
(43) Date of publication of application: **27.12.1996**
(21) Application number: 96109874.6
(22) Date of filing: 19.06.1996
(51) Int. Cl.: H04B 7/15, H04B 7/26

(54) **Satellite and terrestrial cellular integrated mobile communication system**

(30) Priority: 19.06.1995 JP 151468/95; 30.06.1995 JP 164983/95
(71) Applicant: NTT MOBILE COMMUNICATIONS NETWORK INC., Minato-ku, Tokyo (JP)
(72) Inventor: Nishi, Yasuki, Yokosukashi, Kanagawa-ken (JP); Ueno, Susumu, Yokosukashi, Kanagawa-ken (JP); Ueda, Takashi, Yokohamashi, Kanagawa-ken (JP); Nagata, Kiyohito, Yokohamashi, Kanagawa-ken (JP)
(74) Representative: Ritter und Edler von Fischern, Bernhard, Dipl.-Ing.

(57) **Abstract**

A satellite and terrestrial cellular integrated mobile communication system in which accesses to a satellite mobile communication system can be made by using a mobile terminal for a terrestrial mobile communication system. The system uses a dual mode mobile terminal device formed by a child station capable of making communications through the terrestrial mobile communication system, and a parent station having a satellite mobile terminal function and a terrestrial base station function. The child station makes communications directly through the terrestrial mobile communication system while being inside the terrestrial cellular service area and through the parent station using the satellite mobile communication system while being outside the terrestrial cellular service area. The system may use a satellite zone base station device located outside the terrestrial cellular service area, which has a satellite mobile terminal function and a terrestrial base station function, such that a mobile terminal makes communications through the satellite zone base station using the satellite mobile communication system while being outside the terrestrial cellular service area.

## Description

### BACKGROUND OF THE INVENTION

### Field of the Invention

The present invention relates to a satellite and terrestrial cellular integrated mobile communication system which uses a mobile station capable of making accesses to both a satellite mobile communication system and a terrestrial mobile communication system.

### Description of the Background Art

The terrestrial mobile communication system has been developed around major cities and roads, and in Japan, the service area currently covers more than 30 % in area and more than 70 % in population. However, it is quite ineconomical to try to cover the entire area of Japan by means of the terrestrial mobile communication system alone because of the required costs for base stations and transmission paths.

In order to resolve this problem, there is a proposition to introduce a satellite mobile communication system using satellite stations. The satellite mobile communication system is not suitable for handling concentrated large capacity traffic such as that of the urban area, but economically advantageous for handling low density traffic distributed over wide areas, so that its characteristics are complementary to those of the terrestrial mobile communication system.

Therefore, by introducing a dual mode mobile terminal capable of making accesses to both the satellite mobile communication system and the terrestrial mobile communication system, it is possible to realize an economically advantageous integrated mobile communication system which effectively takes advantages of both the satellite mobile communication system and the terrestrial mobile communication system.

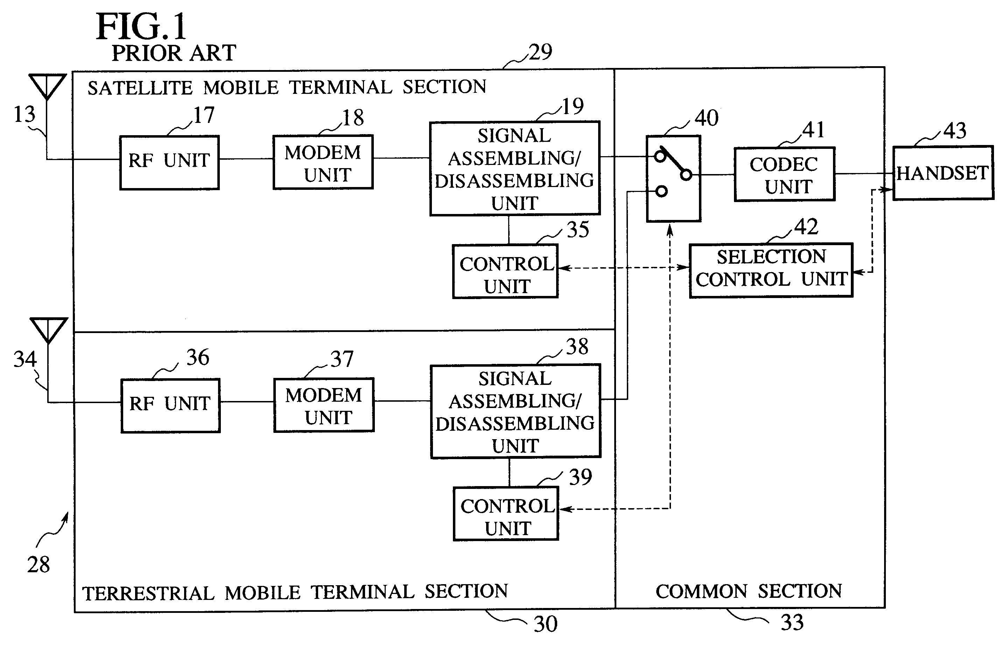

A conventionally proposed dual mode mobile terminal for use in the satellite and terrestrial cellular integrated mobile communication system has a configuration as shown in Fig. 1, where a dual mode mobile terminal 28 generally comprises a satellite mobile terminal section 29, a terrestrial mobile terminal section 30, and a common section 33.

The satellite mobile terminal section 29 includes an antenna unit 13, an RF unit 17 connected with the antenna unit 13, a modem unit 18 connected with the RF unit 17, a signal assembling/disassembling unit 19 connected with the modem unit 18, and a control unit 35 connected with the signal assembling/disassembllng unit 19, while the terrestrial mobile terminal section 30 includes an antenna unit 34, an RF unit 36 connected with the antenna unit 34, a modem unit 37 connected with the RF unit 36, a signal assembling/disassembling unit 38 connected with the modem unit 37, and a control unit 39 connected with the signal assembling/disassembling unit 38, which are independently provided from the corresponding elements of the satellite mobile terminal section 29.

The common section 33 includes a switch 40 for selectively connecting the signal assembling/disassembling unit 19 or 38 of the satellite mobile terminal section 29 or the terrestrial mobile terminal section 30, a selection control unit 42 for carrying out controls such as that of a system selection, a codec unit 41 connected with the switch 40, and a handset 43 connected with the codec unit 41.

Now, this dual mode mobile terminal 28 of Fig. 1 can be used for a communication with a terminal on a public network as follows.

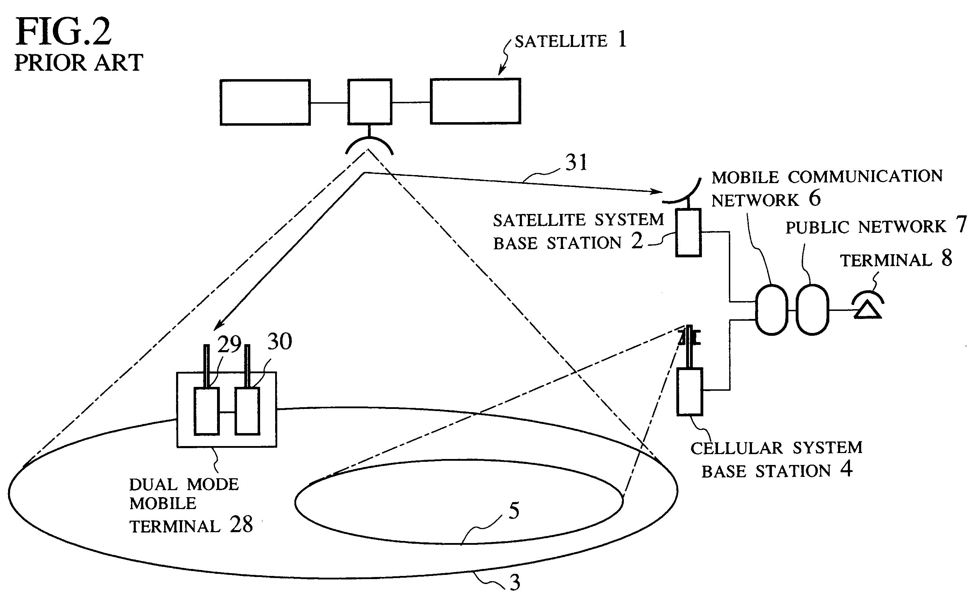

Namely, Fig. 2 shows a situation in which the dual mode mobile terminal 28 communicates with a terminal on a public network while being located outside of a terrestrial cellular service area. In Fig. 2, the system includes a satellite 1 covering a satellite service area 3, a satellite system base station 2, a cellular system base station 4 covering a terrestrial cellular service area 5, a mobile communication network 6 connected with the base stations 2 and 4, a public network 7 connected with the mobile communication network 6, and a terminal 8 provided on the public network 7. The dual mode mobile terminal 28 has the satellite mobile terminal section 29 and the terrestrial mobile terminal section 30 as in a configuration of Fig. 1.

When the dual mode mobile terminal 28 is located outside of the terrestrial cellular service area 5 as shown in Fig. 2, the dual mode mobile terminal 28 communicates with the terminal 8 by means of the satellite mobile terminal section 29 which is connected with the terminal 8 through the satellite 1, the satellite system base station 2, the mobile communication network 6, and the public network 7, via a route 31 indicated in Fig. 2.

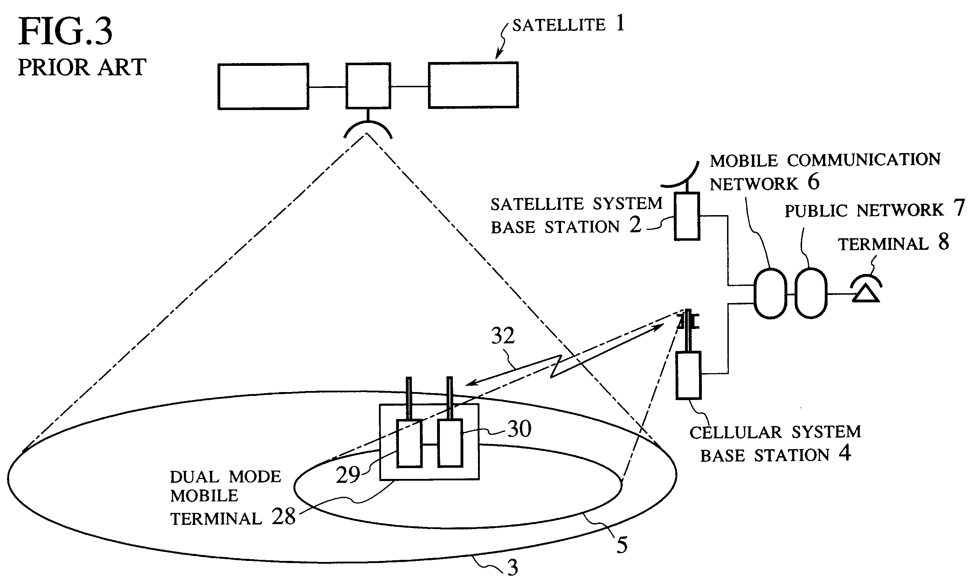

On the other hand, Fig. 3 shows a situation in which the dual mode mobile terminal 28 communicates with the terminal 8 on the public network 7 while being located inside of the terrestrial cellular service area 5. In this case, the dual mode mobile terminal 28 communicates with the terminal 8 by means of the terrestrial mobile terminal section 30 which is connected with the terminal 8 through the cellular system base station 4, the mobile communication network 6 and the public network 7, via a route 32 indicated in Fig. 3. Here, whether the dual mode mobile terminal 28 is located inside the terrestrial cellular service area 5 or not can be judged according to a reception level of the terrestrial mobile communication system.

Now, the introduction of the dual mode mobile terminal as described above which is capable of making accesses to both the satellite mobile communication system and the terrestrial mobile communication system is an effective measure for economically enlarging the service area from a point of view of a mobile communication system operator, but it is problematic from a point of view of a user as it requires a user to purchase a new mobile terminal and subscribe to a satellite service.

Moreover, the terrestrial mobile communication system is already well established in our society and a highly convenient portable terminal for the terrestrial mobile communication system is already in use, but it is expected that a certain technological breakthrough is needed in order to realize a similar portable terminal for the satellite mobile communication system to be introduced from now on.

When a user of the terrestrial mobile communication system who already owns a portable terminal for the terrestrial mobile communication system wants to use the satellite and terrestrial cellular integrated mobile communication system, it is necessary for this user to change the already owned portable terminal to the dual mode mobile terminal of the satellite and terrestrial cellular integrated mobile communication system, but the dual mode mobile terminal is likely to be less convenient as it is expected to have a larger size due to the added functions, and besides, the already owned portable terminal for the terrestrial mobile communication system will be totally wasteful.

### SUMMARY OF THE INVENTION

It is therefore an object of the present invention to provide a satellite and terrestrial cellular integrated mobile communication system in which accesses to the satellite mobile communication system can be made by using the mobile terminal for the terrestrial mobile communication system.

It is another object of the present invention to provide a satellite and terrestrial cellular integrated mobile communication system which can provide an effective measure for economically enlarging the service area to a mobile communication system operator, without causing any inconveniences to users.

According to one aspect of the present invention there is provided a satellite and terrestrial cellular integrated mobile communication system, comprising: a satellite mobile communication system covering a satellite service area; a terrestrial mobile communication system covering a terrestrial cellular service area; and a dual mode mobile terminal formed by a child station capable of making communications through the terrestrial mobile communication system, and a parent station having a function for making communications through the satellite mobile communication system and a function of a base station for the terrestrial mobile communication system, wherein the child station makes communications directly through the terrestrial mobile communication system while being inside the terrestrial cellular service area and through the parent station using the satellite mobile communication system while being outside the terrestrial cellular service area and inside the satellite service area.

According to another aspect of the present invention there is provided a satellite and terrestrial cellular integrated mobile communication system, comprising: a satellite mobile communication system covering a satellite service area; a terrestrial mobile communication system covering a terrestrial cellular service area; a satellite zone base station, located outside the terrestrial cellular service area and inside the satellite service area, having a function of a mobile terminal for the satellite mobile communication system and a function of a base station for the terrestrial mobile communication system; and a mobile terminal for making communications directly through the terrestrial mobile communication system while being inside the terrestrial cellular service area and through the satellite zone base station using the satellite mobile communication system while being outside the terrestrial cellular service area and inside the satellite service area.

According to another aspect of the present invention there is provided a dual mode mobile terminal device for a satellite and terrestrial cellular integrated mobile communication system formed by a satellite mobile communication system covering a satellite service area and a terrestrial mobile communication system covering a terrestrial cellular service area, the device comprising: a child station capable of making communications through the terrestrial mobile communication system; and a parent station having a function for making communications through the satellite mobile communication system and a function of a base station for the terrestrial mobile communication system, wherein the child station makes communications directly through the terrestrial mobile communication system while being inside the terrestrial cellular service area and through the parent station using the satellite mobile communication system while being outside the terrestrial cellular service area and inside the satellite service area.

According to another aspect of the present invention there is provided a satellite zone base station device for a satellite and terrestrial cellular integrated mobile communication system formed by a satellite mobile communication system covering a satellite service area, a terrestrial mobile communication system covering a terrestrial cellular service area, and a mobile terminal, the device comprising: a satellite mobile terminal section for realizing a function of a mobile terminal for the satellite mobile communication system; and a terrestrial base station section for realizing a function of a base station for the terrestrial mobile communication system; wherein the device is located outside the terrestrial cellular service area and inside the satellite service area, and the mobile terminal makes communications through the device using the satellite mobile communication system while being outside the terrestrial cellular service area and inside the satellite service area.

Other features and advantages of the present invention will become apparent from the following description taken in conjunction with the accompanying drawings.

### BRIEF DESCRIPTION OF THE DRAWINGS

Fig. 1 is a block diagram of a conventional dual mode mobile terminal for a satellite and terrestrial cellular integrated mobile communication system.

Fig. 2 is a schematic diagram of a conventional satellite and terrestrial cellular integrated mobile communication system when a dual mode mobile terminal is located outside a terrestrial cellular service area.

Fig. 3 is a schematic diagram of a conventional satellite and terrestrial cellular integrated mobile communication system when a dual mode mobile terminal is located inside a terrestrial cellular service area.

Fig. 4 is a block diagram of a parent station of a dual mode mobile terminal in the first embodiment of a satellite and terrestrial cellular integrated mobile communication system according to the present invention.

Fig. 5 is a schematic diagram of the first embodiment of a satellite and terrestrial cellular integrated mobile communication system according to the present invention when a dual mode mobile terminal is located outside a terrestrial cellular service area.

Fig. 6 is a schematic diagram of the first embodiment of a satellite and terrestrial cellular integrated mobile communication system when a dual mode mobile terminal is located inside a terrestrial cellular service area.

Fig. 7 is a schematic diagram of the second embodiment of a satellite and terrestrial cellular integrated mobile communication system according to the present invention.

Fig. 8 is a block diagram of a satellite zone base station in the second embodiment of a satellite and terrestrial cellular integrated mobile communication system according to the present invention.

Fig. 9 is a sequence chart for a position registration operation in the second embodiment of a satellite and terrestrial cellular integrated mobile communication system according to the present invention.

Fig. 10 is a sequence chart for a transmission operation in the second embodiment of a satellite and terrestrial cellular integrated mobile communication system according to the present invention.

Fig. 11 is a sequence chart for a reception operation in the second embodiment of a satellite and terrestrial cellular integrated mobile communication system according to the present invention.

### DETAILED DESCRIPTION OF THE PREFERRED EMBODIMENTS

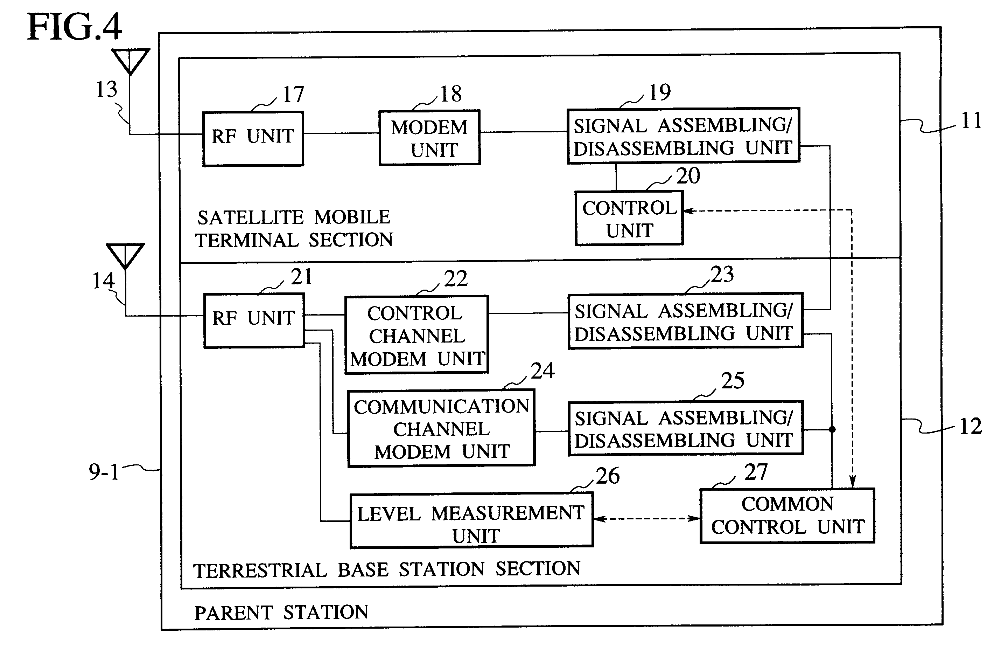

Referring now to Fig. 4 to Fig. 6, the first embodiment of a satellite and terrestrial cellular integrated mobile communication system according to the present invention will be described in detail.

In this first embodiment, a mobile station is provided in a form of a dual mode mobile terminal formed by a child station capable of making communications through the terrestrial mobile communication system, and a parent station having a function for making communications through the satellite mobile communication system and a function of a base station of the terrestrial mobile communication system.

The parent station forms a micro-service area for the terrestrial mobile communication system around itself, using the satellite mobile communication system as an entrance for the terrestrial base station function. A detailed configuration of this parent station will be described below.

The child station makes communications either directly through the terrestrial mobile communication system when it is located inside the cellular service area of the terrestrial mobile communication system, or by using the micro-service area provided by the parent station when it is located outside the cellular service area of the terrestrial mobile communication system. This child station can be provided by a conventionally used portable terminal for the usual terrestrial mobile communication system.

The parent station of the dual mode mobile terminal to be used as a mobile station in this satellite and terrestrial cellular integrated mobile communication system of the first embodiment has a configuration as shown in Fig. 4, where a parent station 9-1 generally comprises a satellite mobile terminal section 11 and a terrestrial base station section 12.

The satellite mobile terminal section 11 includes an antenna unit 13, an RF unit 17 connected with the antenna unit 13, a modem unit 18 connected with the RF unit 17, a signal assembling/disassembling unit 19 connected with the modem unit 18, and a control unit 20 connected with the signal assembling/disassembling unit 19.

The terrestrial base station section 12 includes an antenna unit 14, an RF unit 21 connected with the antenna unit 14, a modem unit 22 and a signal assembling/disassembling unit 23 for control channel which are connected with the RF unit 21, a modem unit 24 and a signal assembling/disassembling unit 25 for a communication channel which are also connected with the RF unit 21, a level measurement unit 26 connected with the RF unit 21 for measuring reception levels of radio channels used by the terrestrial mobile communication system around this parent station 9-1, and a common control unit 27 connected with the level measurement unit 26 and the control unit 20 of the satellite mobile terminal section 11 for carrying out a control of the operation in the terrestrial base station section 12 as well as a timing control with respect to the satellite mobile terminal section 11.

The signal assembling/disassembling unit 19 of the satellite mobile terminal section 11 is also connected with the control channel signal assembling/disassembling unit 23 of the terrestrial base station section 12, while the signal assembling/disassembling units 23 and 25 are also connected with the common control unit 27 in the terrestrial base station section 12.

The terrestrial base station section 12 of the parent station 9-1 monitors the reception levels of radio channels used by the terrestrial mobile communication system around itself at a prescribed time interval by means of the level measurement unit 26, and autonomously determines a radio channel that can be used by this parent station 9-1 without causing any radio interference with other systems located around.

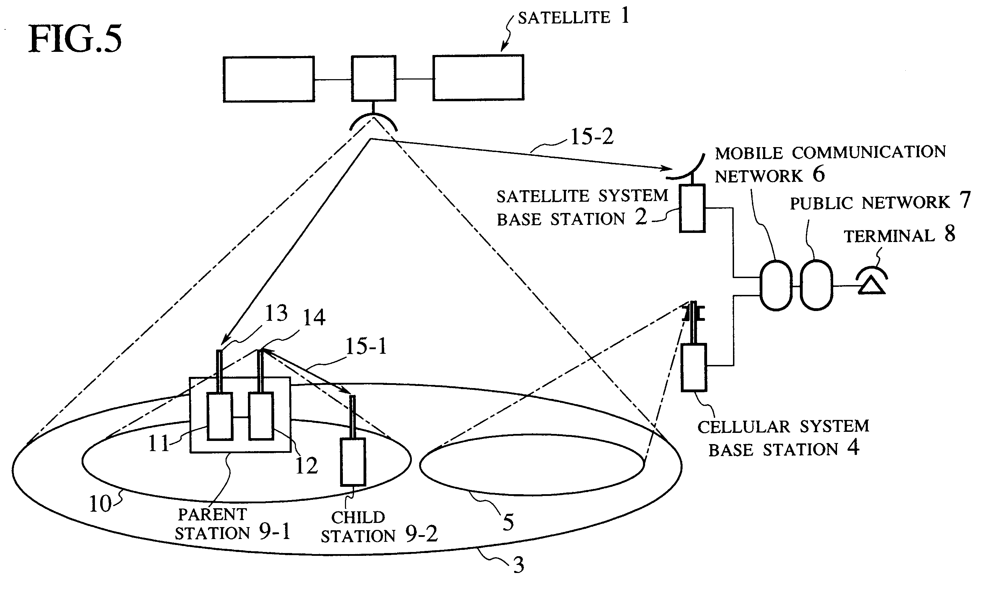

Fig. 5 shows an overall configuration of the satellite and terrestrial cellular integrated mobile communication system of this first embodiment for a case of making communication with a terminal provided on a public network using the parent station 9-1 of Fig. 4.

This Fig. 5 shows a situation in which the dual mode mobile terminal communicates with a terminal on a public network while being located outside of a terrestrial cellular service area. In Fig. 5, the system includes a satellite 1 covering a satellite service area 3, a satellite system base station 2, a cellular system base station 4 covering a terrestrial cellular service area 5, a mobile communication network 6 connected with the base stations 2 and 4, a public network 7 connected with the mobile communication network 6, and a terminal 8 provided on the public network 7. The parent station 9-1 has the satellite mobile terminal section 11 and the terrestrial base station section 12 as in a configuration of Fig. 4. Also, a child station 9-2 is provided within a micro-service area 10 provided by the terrestrial base station section 12 of the parent station 9-1.

When the parent station 9-1 is located outside of the terrestrial cellular service area 5 as shown in Fig. 5, the terrestrial base station section 12 of the parent station 9-1 provides the micro-service area 10 around itself using the satellite mobile terminal section 11 as an entrance. Consequently, the child station 9-2 communicates with the terminal 8 by being connected with the terminal 8 through the satellite 1, the satellite system base station 2, the mobile communication network 6, and the public network 7, using the micro-service area 10 provided by the parent station 9-1 via routes 15-1 and 15-2 indicated in Fig. 5.

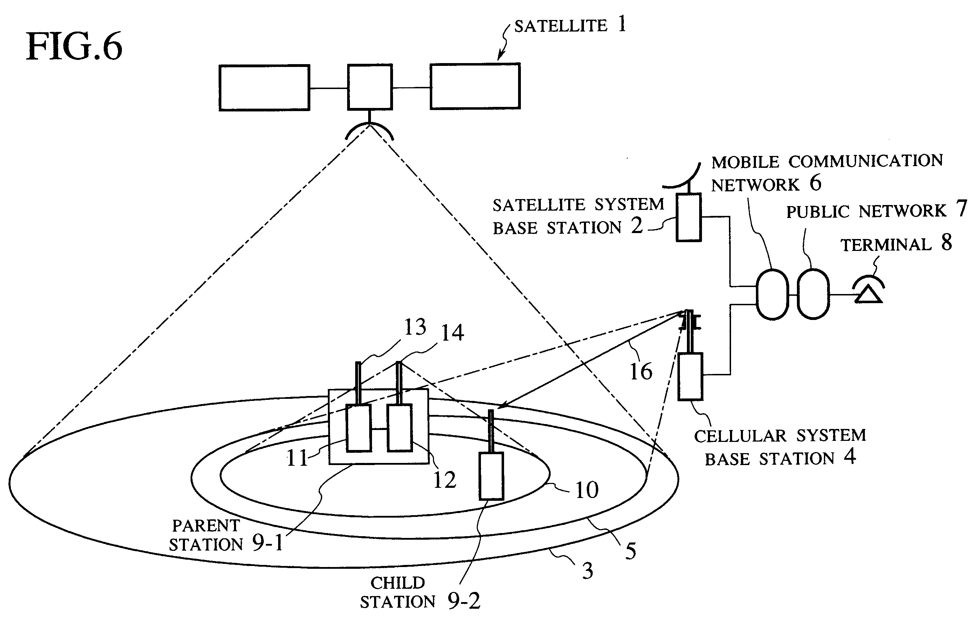

On the other hand, Fig. 6 shows an overall configuration of the satellite and terrestrial cellular integrated mobile communication system of this first embodiment for a case of making communication with a terminal provided on a public network without using the parent station 9-1.

This Fig. 6 shows a situation in which the dual mode mobile terminal communicates with the terminal 8 on a public network 7 while being located inside of the terrestrial cellular service area 5. In this case, the child station 9-2 communicates with the terminal 8 by making an access to the cellular system base station 4 directly, so as to be connected with the terminal 8 through the cellular system base station 4, the mobile communication network 6, and the public network 7, via a route 16 indicated in Fig. 6.

From this situation of Fig. 6, when the parent station 9-1 moves to outside of the terrestrial cellular service area 5 as in Fig. 5, the child station 9-2 loses the control channel that has been received until then, so that the child station 9-2 scans through control channels to hunt a control channel transmitted by the parent station 9-1, and carries out a position registration with respect to the parent station 9-1. When the position registration from the child station 9-2 is received, the parent station 9-1 carries out the position registration with respect to the satellite mobile communication system by using the satellite mobile terminal section 11, so as to register this parent station 9-1 of the dual mode mobile terminal in the satellite mobile communication system. At this point, it becomes possible to carry out the transmission and the reception via the satellite mobile communication system.

On the contrary, from the situation of Fig. 5, when the parent station 9-1 moves to inside of the terrestrial cellular service area 5 as in Fig. 6, the parent station 9-1 can recognize the entry into the terrestrial cellular service area 5 as it becomes possible to receive the control channel of the cellular system base station 4 located around.

Consequently, when the entry into the terrestrial cellular service area 5 is recognized, the parent station notifies the control channel of the cellular system base station 4 by means of a notification information, while changing a frequency of the currently transmitted control channel and a position information, so as to urge the channel scan to the child station 9-2.

As a result, the child station 9-2 loses the control channel that has been hunted up until then, so that the child station 9-2 carries out the channel scan to hunt the control channel of the terrestrial mobile communication system according to the notification information received up until then, and carries out the position registration. At this point, the child station 9-2 becomes capable of making directly transmission and reception with respect to the terrestrial mobile communication system.

Note that, at a time of urging the child station 9-2 to carry out the channel scan, the parent station 9-1 changes the position information in addition to the frequency of the control channel in order to detect an erroneous case in which the child station 9-2 hunts the control channel of the parent station 9-1 again by mistake. Namely, as the position information is changed, the position registration is carried out, so that it is possible to recognize such an erroneous case in which the child station 9-2 does not shift to the terrestrial mobile communication system. In such a case, the same operation is to be repeated again.

Note also that the parent station 9-1 can be connected with a terminal on a public network, similarly as in a case of the conventional dual mode mobile terminal described above, as follows.

Namely, when the parent station 9-1 is located outside of the terrestrial cellular service area 5 as shown in Fig. 5, the parent station 9-1 can be connected with the terminal 8 by means of the satellite mobile terminal section 11 which is connected with the terminal 8 through the satellite 1, the satellite system base station 2, the mobile communication network 6, and the public network 7, via a route 15-2 indicated in Fig. 5.

As described, in this first embodiment, a mobile station is provided in a form of a dual mode mobile terminal formed by a child station capable of making communications through the terrestrial mobile communication system, and a parent station having a function for making communications through the satellite mobile communication system and a function of a base station of the terrestrial mobile communication system, and the child station makes communications either directly through the terrestrial mobile communication system when it is located inside the cellular service area of the terrestrial mobile communication system, or by using the micro-service area provided by the parent station when it is located outside the cellular service area of the terrestrial mobile communication system.

Consequently, it is possible to utilize a highly convenient conventionally used portable terminal for the usual terrestrial mobile communication system as the child station of the dual mode mobile terminal, and it becomes possible to provide a satellite and terrestrial cellular integrated mobile communication system in which accesses to the satellite mobile communication system can be made by using the mobile terminal for the terrestrial mobile communication system, without wasting the portable terminal already in use.

Moreover, it becomes possible to provide a satellite and terrestrial cellular integrated mobile communication system which can provide an effective measure for economically enlarging the service area to a mobile communication system operator, without causing any inconveniences to users.

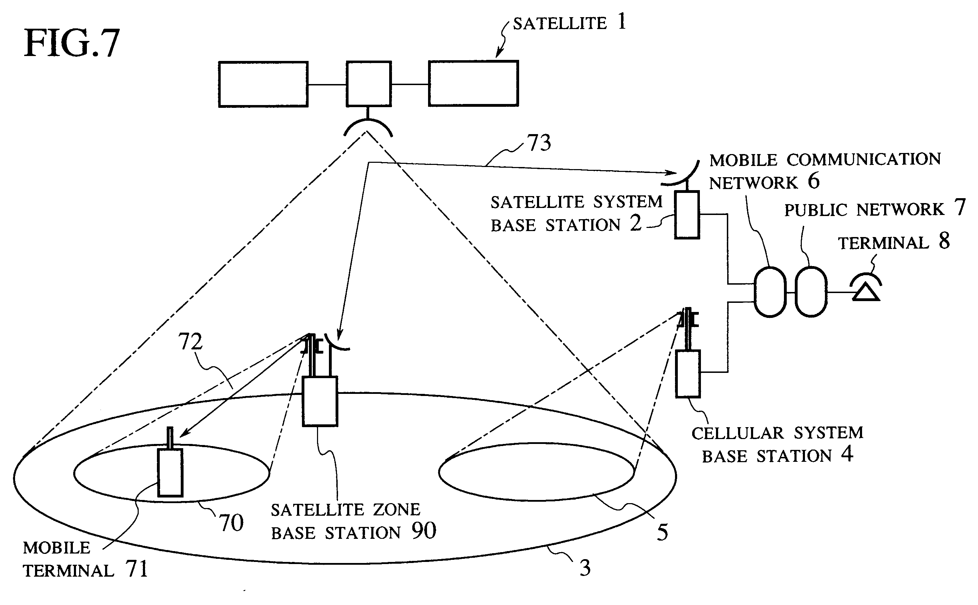

Referring now to Fig. 7 to Fig. 11, the second embodiment of a satellite and terrestrial cellular integrated mobile communication system according to the present invention will be described in detail.

In this second embodiment, for mobile communications outside the terrestrial cellular service area of the terrestrial mobile communication system, the system includes a satellite zone base station having a function of a mobile terminal in the satellite mobile communication system and a function of a base station of the terrestrial mobile communication system. The system also includes a mobile terminal which is capable of making communications using either the terrestrial mobile communication system through the cellular system base station, or the satellite mobile communication system through the satellite zone base station and the satellite system base station.

Fig. 7 shows an overall configuration of the satellite and terrestrial cellular integrated mobile communication system of this second embodiment. In Fig. 7, the system includes a satellite 1 covering a satellite service area 3, a satellite system base station 2, a cellular system base station 4 covering a terrestrial cellular service area 5, a mobile communication network 6 connected with the base stations 2 and 4, a public network 7 connected with the mobile communication network 6, and a terminal 8 provided on the public network 7. In addition, the system includes the satellite zone base station 90 located outside of the terrestrial cellular service area 5 and covering a satellite zone service area 70, and the mobile terminal 71 located within the satellite zone service area 70.

This Fig. 7 shows a situation in which the mobile terminal 71 communicates with the terminal 8 on the public network 7 while being located outside of the terrestrial cellular service area 5, through the satellite zone base station 90, using the satellite mobile communication system as an entrance.

For the economical reason, the cellular system base station 4 can be provided only in an area populated by many users, so that it is difficult to expand the terrestrial cellular service area 5 to cover all the areas to which the service should be provided. However, in the satellite and terrestrial cellular integrated mobile communication system of this second embodiment, it is possible to form an additional service area of the terrestrial mobile communication system by providing a satellite zone base station 90 which requires no terrestrial entrance communication channel.

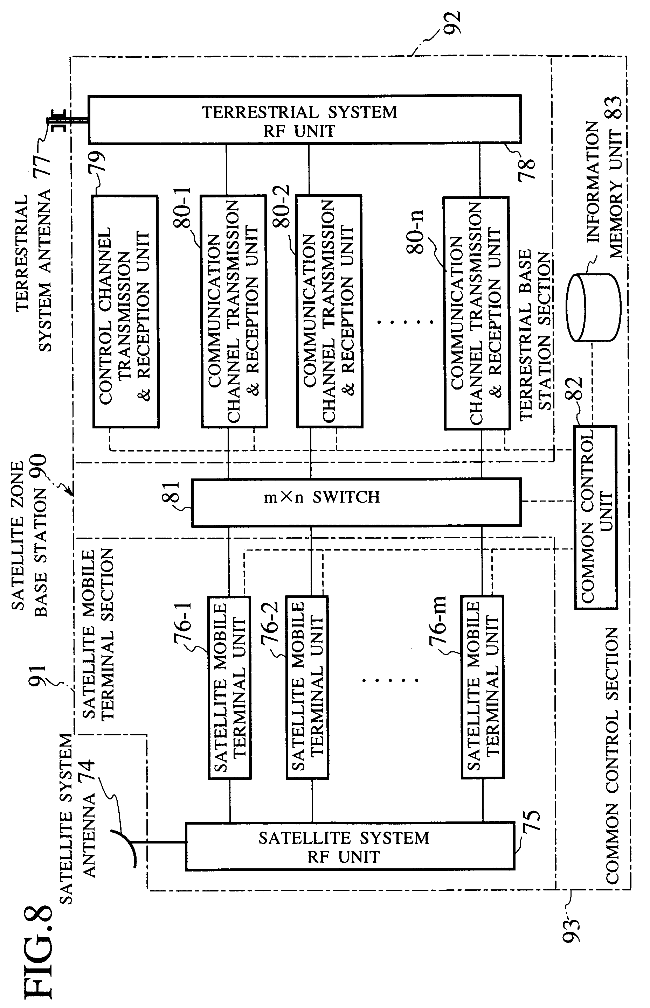

The satellite zone base station 90 in the satellite and terrestrial cellular integrated mobile communication system of the second embodiment has a configuration as shown in Fig. 8, where the satellite zone base station 90 generally comprises a satellite mobile terminal section 91 for using the satellite mobile communication system as an entrance, a terrestrial base station section 92 for making communications with the mobile terminal 71, and a common control section 93.

The satellite mobile terminal section 91 includes a satellite system antenna 74, a satellite system RF unit 75 connected with the satellite system antenna 74, and a plurality of satellite mobile terminal units 76-1 to 76-m connected with the satellite system RF unit 75. Note here that, when each of the satellite mobile terminal units 76-1 to 76-m has its own satellite system antenna and satellite system RF unit, there is no need to provide the satellite system antenna 74 and the satellite system RF unit 75 separately as shown in Fig. 8.

The terrestrial base station section 92 includes a terrestrial system antenna 77, a terrestrial system RF unit 78 connected with the terrestrial system antenna 77, a control channel transmission and reception unit 79, and a plurality of communication channel transmission and reception units 80-1 to 80-n connected with the terrestrial system RF unit 78.

The common control section 93 includes an m × n switch 81 for switching and connecting communication paths of the satellite mobile terminal units 76-1 to 76-m and the communication channel transmission and reception units 80-1 to 80-n, an information memory unit 83 for storing information on the mobile terminal 71 which makes a position registration to this satellite zone base station 90, and a common control unit 82 connected with the satellite mobile terminal units 76-1 to 76-m, the control channel transmission and reception unit 79, the communication channel transmission and reception units 80-1 to 80-n, the m × n switch 81, and the information memory unit 83, for carrying out a sequence control of the terrestrial base station section 92, a management of utilization states of the satellite mobile terminal units 76-1 to 76-m, and a control of the m × n switch 81.

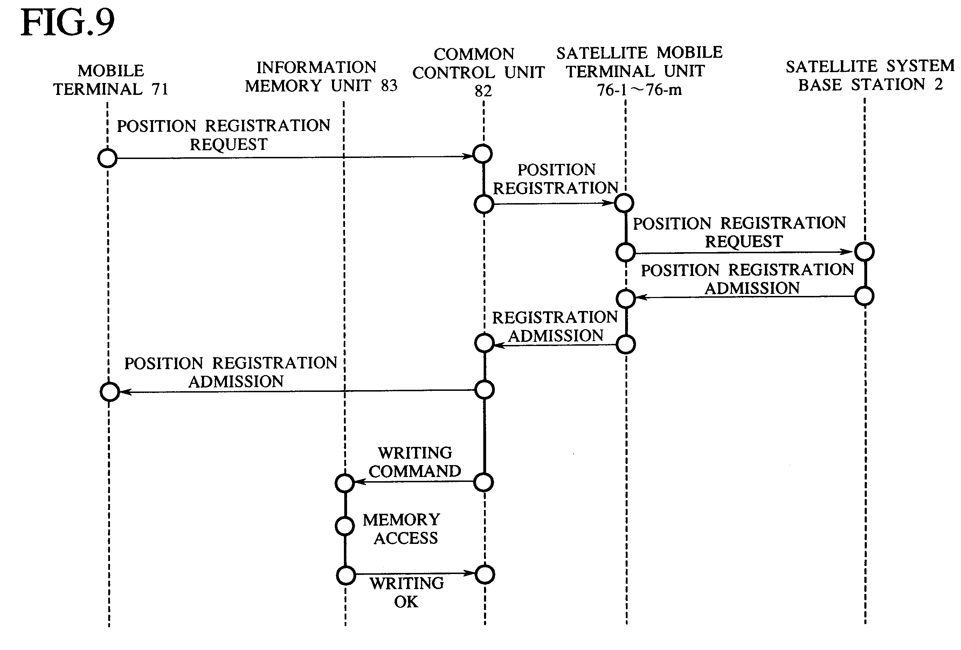

Now, the operations in the above described satellite and terrestrial cellular integrated mobile communication system of the second embodiment using the satellite zone base station 90 of Fig. 8 will be described with references to sequence charts of Fig. 9 to Fig. 11.

First, with reference to Fig. 9, a position registration sequence will be described.

When a "position registration request" is sent from the mobile terminal 71 to the satellite zone base station 90 via the control channel, the common control unit 82 of the satellite zone base station 90 selects one satellite mobile terminal unit 76-i among the satellite mobile terminal units 76-1 to 76-m which is currently not in use, and transmits the "position registration request" to the satellite system base station 2 via the satellite 1 by using this selected satellite mobile terminal unit 76-i.

This "position registration request" is then transmitted from the satellite system base station 2 to the mobile communication network 6, and when the position registration is admitted by the mobile communication network 6, a "position registration admission" is returned via the satellite 1. In response, the common control unit 82 of the satellite zone base station 90 returns the "position registration admission" to the mobile terminal 71 which sent the "position registration request", and outputs a writing command to the information memory unit 83, so that the information memory unit 83 stores the mobile terminal information for this mobiel terminal 71.

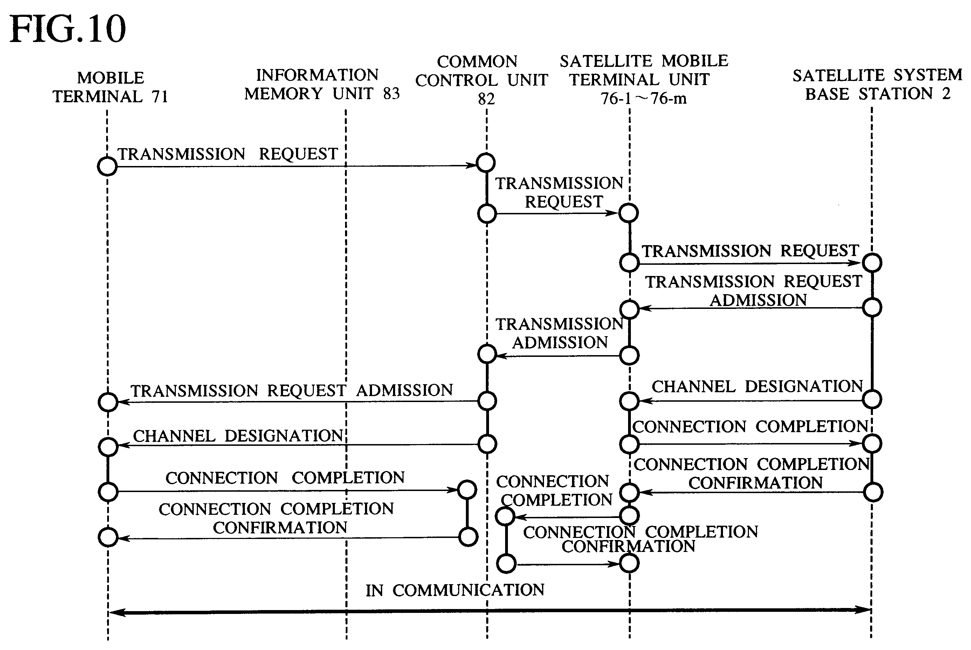

Next, with reference to Fig. 10, a transmission sequence will be described.

When a "transmission request" is sent from the mobile terminal 71 to the satellite zone base station 90, the common control unit 82 of the satellite zone base station 90 selects one satellite mobile terminal unit 76-i among the satellite mobile terminal units 76-1 to 76-m which is currently not in use, activates this selected satellite mobile terminal unit 76-i, and transmits the "transmission request" to the satellite system base station 2 via the satellite 1 by using this selected satellite mobile terminal unit 76-i, so as to start a transmission sequence in the satellite mobile communication system.

When the "transmission request" is admitted in the satellite mobile comunication system, and a "transmission request admission" is returned from the satellite system base station 2 via the satellite 1, the common control unit 82 of the satellite zone base station 90 returns the "transmission request admission" to the mobile terminal 71 which sent the "transmission request", and then executes a transmission sequence in the terrestrial base station section 92.

When a communication channel connection is completed in the satellite system side and the terrestrial system side by means of a channel designation, a connection completion, and a connection completion confirmation, the common control unit 82 of the satellite zone base station 90 controls the m × n switch 81 to connect the communication paths of the satellite mobile terminal unit 76-i and the communication channel transmission and reception unit 80-i, so as to set the system in communication state.

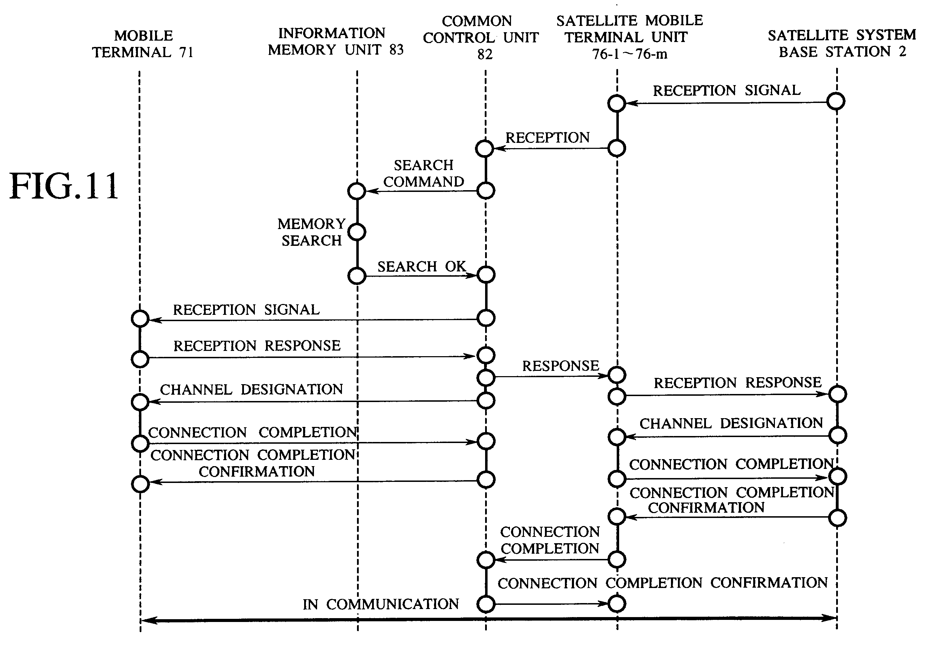

Next, with reference to Fig. 11, a reception sequence will be described.

When a "reception signal" is transmitted from the satellite system base station 2 via the satellite 1 to the satellite zone base station 90, the reception information which is a necessary part of the "reception signal" is entered into the common control unit 82 of the satellite zone base station 90 from all the satellite mobile terminal units 76 which are currently not in use among the satellite mobile terminal units 76-1 to 76-m.

The common control unit 82 then commands a search of a receiving mobile terminal to the information memory unit 83 according to the received reception information, and when a corresponding mobile terminal is found by the information memory unit 83, the "reception signal" is transmitted to this found mobile terminal 71 by using the control channel transmission and reception unit 79.

When a "reception response" is sent from this found mobile terminal 71, the common control unit 82 continues the reception sequence with respect to this mobile terminal 71, while selecting one satellite mobile terminal unit 76-i among the satellite mobile terminal units 76-1 to 76-m which is currently not in use, and continuing the reception sequence in the satellite mobile communication system by using this selected satellite mobile terminal unit 76-i.

When a communication channel connection is completed in the satellite system side and the terrestrial system side by means of a channel designation, a connection completion, and a connection completion confirmation, the common control unit 82 of the satellite zone base station 90 controls the m × n switch 81 to connect the communication paths of the satellite mobile terminal unit 76-i and the communication channel transmission and reception unit 80-i, so as to set the system in communication state.

In the above described manner, in this second embodiment, the satellite zone base station 90 makes the position registration of the mobile terminal 71 to the satellite mobile communication system and the response to the reception from the satellite mobile communication system with respect to the mobile terminal 71, by using the satellite mobile terminal section 91, while also relays the reception from the satellite mobile communication system to the mobile terminal 71 by using the terrestrial base station section 92, and connects the transmission from the mobile terminal 71 within the satellite zone service area 70 via the satellite mobile communication system by using the satellite mobile terminal section 91.

Consequently, it becomes possible to use the satellite mobile communication system as an entrance for the base station of the terrestrial mobile communication system, and this entrance can be used efficiently in a manner of demand assign for each call, so that it is possible to suppress the cost for entrance low, while there is no need to newly develop a system for an entrance so that there is no need for a development cost.

As a result, this second emodiment can make it practically plausible to introduce the base stations for the terrestrial mobile communication system into areas with relatively small traffic, and thereby realize a satellite and terrestrial cellular integrated mobile communication system which can provide an effective measure for economically enlarging the service area to a mobile communication system operator, without causing any inconveniences to users.

It is to be noted that, besides those already mentioned above, many modifications and variations of the above embodiments may be made without departing from the novel and advantageous features of the present invention. Accordingly, all such modifications and variations are intended to be included within the scope of the appended claims.

## Claims

1. A satellite and terrestrial cellular integrated mobile communication system, comprising:
a satellite mobile communication system covering a satellite service area;
a terrestrial mobile communication system covering a terrestrial cellular service area; and
a dual mode mobile terminal formed by a child station capable of making communications through the terrestrial mobile communication system, and a parent station having a function for making communications through the satellite mobile communication system and a function of a base station for the terrestrial mobile communication system, wherein the child station makes communications directly through the terrestrial mobile communication system while being inside the terrestrial cellular service area and through the parent station using the satellite mobile communication system while being outside the terrestrial cellular service area and inside the satellite service area.

2. The system of claim 1, wherein the child station is a portable terminal for the terrestrial mobile communication system.

3. The system of claim 1, wherein the parent station uses the satellite mobile communication system as an entrance for the function of the base station for the terrestrial mobile communication system.

4. The system of claim 1, wherein the parent station forms a micro-service area within which the child station can make communications through the parent station.

5. The system of claim 1, wherein the parent station includes:
a satellite mobile terminal section for making communications through the satellite mobile communication system; and
a terrestrial base station section for realizing the function of the base station for the terrestrial mobile communication system.

6. A satellite and terrestrial cellular integrated mobile communication system, comprising:
a satellite mobile communication system covering a satellite service area;
a terrestrial mobile communication system covering a terrestrial cellular service area;
a satellite zone base station, located outside the terrestrial cellular service area and inside the satellite service area, having a function of a mobile terminal for the satellite mobile communication system and a function of a base station for the terrestrial mobile communication system; and
a mobile terminal for making communications directly through the terrestrial mobile communication system while being inside the terrestrial cellular service area and through the satellite zone base station using the satellite mobile communication system while being outside the terrestrial cellular service area and inside the satellite service area.

7. The system of claim 6, wherein the mobile terminal is a portable terminal for the terrestrial mobile communication system.

8. The system of claim 6, wherein the satellite zone base station uses the satellite mobile communication system as an entrance for the function of the base station for the terrestrial mobile communication system.

9. The system of claim 6, wherein the satellite zone base station forms a micro-service area within which the mobile terminal can make communications through the satellite zone base station.

10. The system of claim 6, wherein the satellite zone base station includes:
a satellite mobile terminal section for realizing the function of the mobile terminal for the satellite mobile communication system;
a terrestrial base station section for realizing the function of the base station for the terrestrial mobile communication system;
switch means for providing switch connections between the satellite mobile terminal section and the terrestrial base station section; and
common control means for controlling operations of the satellite mobile terminal section, the terrestrial base station section, and the switch means.

11. The system of claim 6, wherein the satellite zone base station includes:
memory means for storing information on each mobile terminal which makes communications through the satellite zone base station.

12. The system of claim 11, wherein the satellite zone base station carries out a position registration of said each mobile station in the satellite mobile communication system according to a position registration request made from said each mobile terminal to the satellite zone base station, while storing the information on said each mobile terminal in the memory means.

13. The system of claim 11, wherein the satellite zone base station makes a response to a reception signal from the satellite mobile communication system with respect to said each mobile terminal whose information is stored in the memory means.

14. The system of claim 11, wherein the satellite zone base station relays a reception signal from the satellite mobile communication system with respect to said each mobile terminal whose information is stored in the memory means.

15. The system of claim 11, wherein the satellite zone base station connects a transmission signal from said each mobile terminal whose information is stored in the memory means, via the satellite mobile communication system.

16. A dual mode mobile terminal device for a satellite and terrestrial cellular integrated mobile communication system formed by a satellite mobile communication system covering a satellite service area and a terrestrial mobile communication system covering a terrestrial cellular service area, the device comprising:
a child station capable of making communications through the terrestrial mobile communication system; and
a parent station having a function for making communications through the satellite mobile communication system and a function of a base station for the terrestrial mobile communication system, wherein the child station makes communications directly through the terrestrial mobile communication system while being inside the terrestrial cellular service area and through the parent station using the satellite mobile communication system while being outside the terrestrial cellular service area and inside the satellite service area.

17. The device of claim 16, wherein the child station is a portable terminal for the terrestrial mobile communication system.

18. The device of claim 16, wherein the parent station uses the satellite mobile communication system as an entrance for the function of the base station for the terrestrial mobile communication system.

19. The device of claim 16, wherein the parent station forms a micro-service area within which the child station can make communications through the parent station.

20. The device of claim 16, wherein the parent station includes:
a satellite mobile terminal section for making communications through the satellite mobile communication system; and
a terrestrial base station section for realizing the function of the base station for the terrestrial mobile communication system.

21. A satellite zone base station device for a satellite and terrestrial cellular integrated mobile communication system formed by a satellite mobile communication system covering a satellite service area, a terrestrial mobile communication system covering a terrestrial cellular service area, and a mobile terminal, the device comprising:
a satellite mobile terminal section for realizing a function of a mobile terminal for the satellite mobile communication system; and
a terrestrial base station section for realizing a function of a base station for the terrestrial mobile communication system;
wherein the device is located outside the terrestrial cellular service area and inside the satellite service area, and the mobile terminal makes communications through the device using the satellite mobile communication system while being outside the terrestrial cellular service area and inside the satellite service area.

22. The device of claim 21, wherein the terrestrial base station section is accessible from the mobile terminal which is a portable terminal for the terrestrial mobile communication system.

23. The device of claim 21, wherein the satellite mobile terminal section uses the satellite mobile communication system as an entrance for the terrestrial base station section.

24. The device of claim 21, wherein the terrestrial base station section forms a micro-service area within which the mobile terminal can make communications through the device.

25. The device of claim 21, further comprising:
switch means for providing switch connections between the satellite mobile terminal section and the terrestrial base station section; and
common control means for controlling operations of the satellite mobile terminal section, the terrestrial base station section, and the switch means.

26. The device of claim 21, further comprising:
memory means for storing information on each mobile terminal which makes communications through the satellite zone base station.

27. The device of claim 26, wherein the device carries out a position registration of said each mobile station in the satellite mobile communication system according to a position registration request made from said each mobile terminal to the satellite zone base station, while storing the information on said each mobile terminal in the memory means.

28. The device of claim 26, wherein the device makes a response to a reception signal from the satellite mobile communication system with respect to said each mobile terminal whose information is stored in the memory means.

29. The device of claim 26, wherein the device relays a reception signal from the satellite mobile communication system with respect to said each mobile terminal whose information is stored in the memory means.

30. The device of claim 26, wherein the device connects a transmission signal from said each mobile terminal whose information is stored in the memory means, via the satellite mobile communication system.
